Europäisches Patentamt

European Patent Office

Office européen des brevets

(11) Publication number: **0 301 454**
**A1**

## (12) EUROPEAN PATENT APPLICATION

(21) Application number: 88111920.0

(22) Date of filing: 23.07.88

(51) Int. Cl.⁴: **B65G 15/08 , B65G 15/64 , B65G 39/16**

(30) Priority: 30.07.87 JP 188957/87

(43) Date of publication of application:
01.02.89 Bulletin 89/05

(84) Designated Contracting States:
AT DE FR IT

(71) Applicant: Bridgestone Corporation
10-1, Kyobashi 1-Chome Chuo-Ku
Tokyo 104(JP)

(72) Inventor: Hashimoto, Kunio
1767-24, Fujinoki Wakamatsu-ku
Kitakyushu-shi Fukuoka-ken(JP)
Inventor: Okazaki, Haruo
1-2-20, Miyanomachi Yahatahigashi-ku
Kitakyushu-shi Fukuoka-ken(JP)

(74) Representative: Haft, Berngruber, Czybulka
Postfach 14 02 46 Hans-Sachs-Strasse 5
D-8000 München 5(DE)

(54) Twisting detecting and correction devices in a tubular belt conveyor.

(57) A tubular belt conveyor transports bulk material without spillage. The longitudinal side edge of the belt (1a) is held between a pair of pinch rollers (9), and a guide roller (10) is disposed perpendicular to the length of the pinch roller (9). When the tubular belt (1a) is twisted, the edge moves toward the guide roller (10) and presses it up. The movement of the guide roller (10) is transferred via a limit switch electrically (14) to a correction roller (15) under the belt (1a) to correct the twisting. The guide roller (10) itself forces the side edge in the opposite direction to correct the twisting, too.

FIG.3

# TWISTING DETECTING AND CORRECTION DEVICES IN A TUBULAR BELT CONVEYOR

## BACKGROUND OF THE INVENTION

The present invention relates to a twisting detecting device and a twisting correction device of a tubular belt in a tubular belt conveyor in which the endless belt is rolled up into tubular shape and rotates between a pair of rollers.

U.S. Patent No.4,402,395 issued to Hashimoto on September 6, 1983 discloses a method and device for preventing a tubulat belt conveyor from twisting by varying an angle of a correction roller extending in a direction perpendicular to running direction of the belt in response to a detect roller. However, the shift means for the correction comprises an annular plate, first and second solenoid valves or a hydraulic cylinder, which is complicate in structure and is expensive in manufacturing.

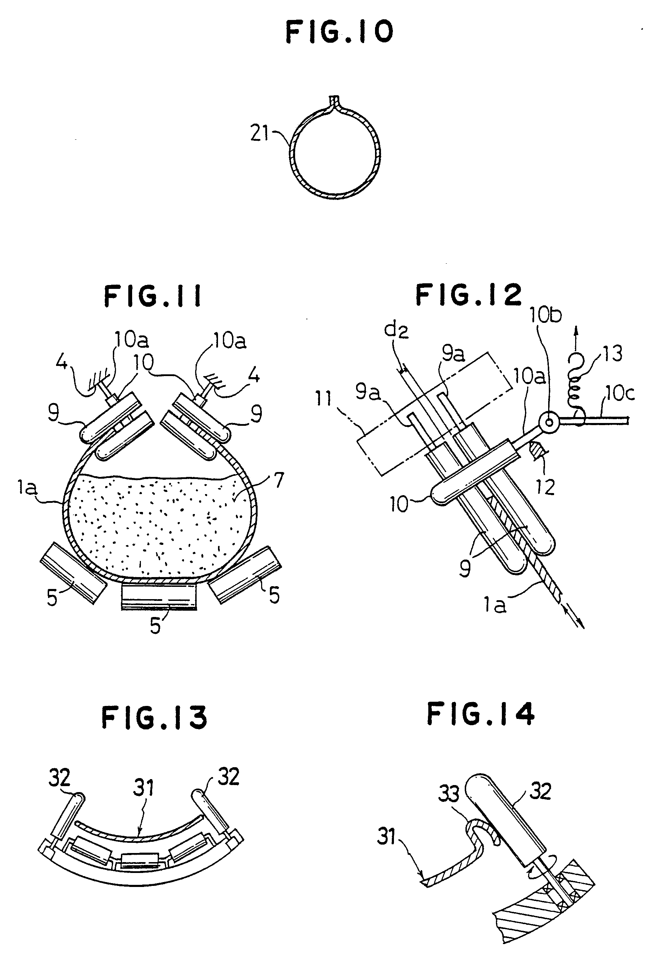

Japanese Utility Model Laid-Open Publication No.62-96004 invented by Hashimoto et al. and published on June 19, 1987 suggests more simple method of detecting twisting automatically. Such detecting means is shown in Figs. 13 and 14 of the present drawings in which two guide rollers 32 and 32 are disposed at the opposite ends of an opened belt 31, each roller having an axis extending in a direction perpendicular to the surface of the belt 31, so as to prevent the belt 31 from deviating.

However, the side edge 33 of the belt 31 is soft and is likely to be bent when the belt 31 meander, so that the meandering can not be corrected. Further, the belt itself may be damaged. Therefore, curved portions which increase with larger length of the tubular belt conveyor have to be observed visually for correction of twisting, which requires considerable labor and time.

## SUMMARY OF THE INVENTION

It is, therefore, a primary object of the present invention to provide a twisting detecting device which can detect twisting of a tubular belt easily.

It is another object of the present invention to provide a twisting detecting device which is less expensive in manufaturing.

It is further object of the present invention to provide a twisting correction device in which the detection means itself corrects twisting by giving force in a direction opposite to the twisting.

It is yet another object of the present invention to provide a twisting correction device for correcting twisting of a tubular belt in response to the twisting detecting device electrically.

To attain the objects, according to the present invention, there is provided a device for detecting twisting of a tubular belt in a tubular belt conveyor in which the endless belt is rolled up into tubular form and rotates between a pair of rollers, the device comprising a pair of pinch rollers between which the longitudinal side edge of the belt is held and means for detecting twisting and disposed perpendicular to the length of the pinch roller, said means being engageable with the longitudinal side edge of the belt held between the pinch rollers on circumferential movement of the side edge when the belt is twisted.

According to the present invention, there is also provided a device for correcting twisting of a tubular belt in a tubular belt conveyor in which the endless belt is rolled up into tubular form and rotates between a pair of rollers, the device comprising a pair of pinch rollers between which the longitudinal side edge is held and means for correcting twisting and disposed perpendicular to the length of the pinch roller to block circumferential movement of the side edge held between the pinch rollers.

According to the present invention, there is further provided a device for correcting twisting of a tubular belt in a tubular belt conveyor in which the endless belt is rolled up into tubular form and rotates between a pair of rollers, the device comprising a pair of pinch rollers between which the longitudinal side edge is held, means for detecting twisting and disposed perpendicular to the length of the pinch roller, said means being engageable with the longitudinal side edge of the belt held between the pinch rollers when the belt is twisted, means for producing an electric signal when the means for detecting twisting is actuated as a result of twisting and means for correcting twisting on receipt of the signal from said means for producing a signal.

## BRIEF DESCRIPTION OF THE DRAWINGS

Other and further objects, features and advantages of the invention will appear from the following description taken in connection with the accompanying drawings wherein:

Fig. 1 is a front view which schematically shows a general tubular belt conveyor having a device according to the present invention;

Fig. 2 is an enlarged sectional view taken along the line II-II in Fig. 1;

Fig. 3 is an enlarged perspective view of an outgoing belt which comprises the device according to the present invention;

Fig. 4 is an enlarged plan view of essential part of the twisting detecting device of Fig. 3;

Fig. 5 is an enlarged longitudinally sectional view of the same;

Fig. 6 is a sectional view taken along the line VI-VI;

Fig. 7 is a sectional view taken along the line VII-VII;

Fig. 8 is a partially-broken plan view of the outgoing belt;

Fig. 9 is a block diagram comprising a solar battery;

Fig. 10 is a vertical sectional view of another embodiment of a conveyor belt to which the present invention applies;

Fig. 11 is a sectional view showing one embodiment of a twisting correction device according to the present invention and similar to Fig. 2;

Fig. 12 is a vertically sectional front view showing another embodiment of twisting correction device according to the present invention;

Fig. 13 is a vertical sectional view of the essential part of a known twisting device; and

Fig. 14 is an enlarged vertical sectional view of the essential part which shows operating condition.


## DETAILED DESCRIPTION OF THE INVENTION

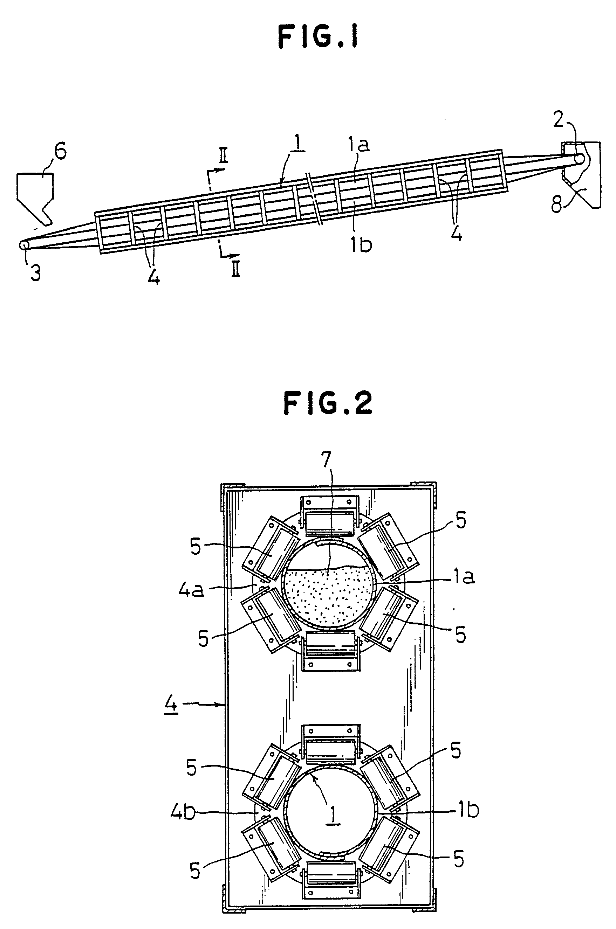

Fig. 1 shows a tubular belt conveyor according to the present invention, in which an endless belt 1 is wound in flat form around a front end roller 2 driven by power and a rear end roller 3 whoch rotates freely.

In Fig. 2, there are a plurality of shape-maintaining frames 4 for guiding the rolled-up endless belt 1, the upper and lower parts of the frame 4 having circular openings 4a and 4b respectively, a plurality of shape-maintaining rollers 5 being arranged around each opening 4a and 4b.

In Fig. 1, the belt 1 which rotates around the rear end roller 3 and opens into flat form is rolled up into U shape through rolling-up rollers (not shown) just after material 7 to be conveyed is fed onto the belt 1 from a hopper 6. Then, the belt 1 is rolled up into tubular form to wrap the material 7 and passes through the upper opening 4a in the shape-maintaining frame 4, so that the material 7 is thrown onto a receiver 8 around the front end roller 2.

The return belt 1b which rotates around the front end roller 2 is rolled up into tubular form again, which passes through the lower opening 4b in the shape-maintaining frame 4 and circulates around the rear end roller 3. The conventional tubular belt conveyor as schematically mentioned above has a long transportation path, so that it is likely to be twisted.

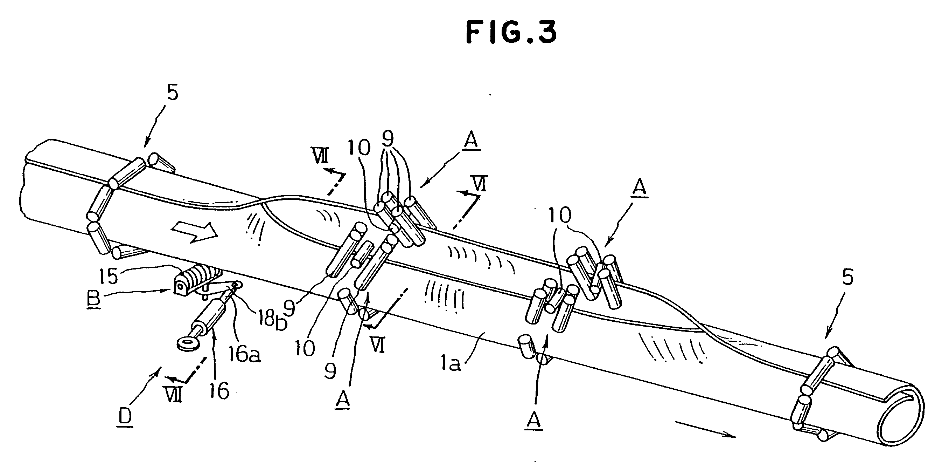

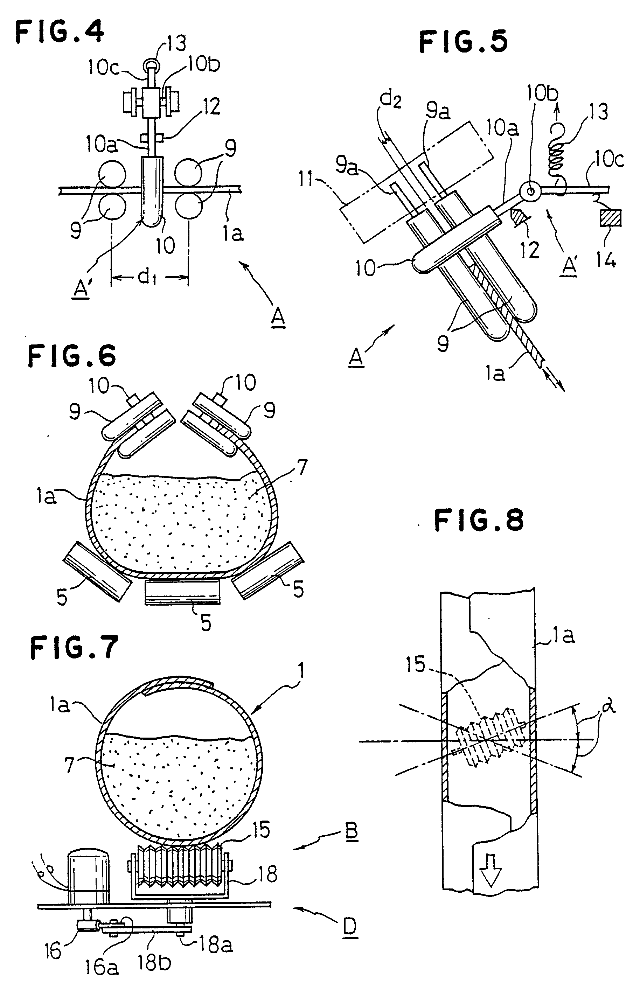

Fig. 3 shows one example of an electric twisting detecting means A which is located at the portion liable to be twisted in the oped outgoing belt 1a in which the tubular belt 1a is opened, four portions of the opened belt being held by four pinch rollers 9 comprising two pairs of pinch rollers as shown in Fig. 4. The distance between the two pairs of pinch rollers is enough to locate a guide roller 10 as described later. Each pair of pinch rollers is rotatably secured around an axis 9a fixed to a frame 11 having a space to hold the belt 1a as shown in Fig. 5.

As shown in Fig. 5, the guide roller 10 is located perpendicular to the pinch rollers 9 and is engageable with the longitudinal side edge of the belt 1 at the outgoing run. The guide roller 10 has a rounded tip and is rotatably secured around an axis 10a, which is supported by an axis 10b to a frame 11, its rotation being limited by a stopper 12. The longitudinal side edge of the belt 1 moves upwardly and presses up the guide roller 10, which is rotatable.

Further, as shown in Fig. 5, the axis 10a comprises a prolongation 10c extending from the support axis 10b, the prolongation 10c being suspended by a spring 13 and rotating downwardly against the spring 13 to actuate a limit switch 14 fixed to the frame 11. The limit switch 14 does not actuate until the guide roller 10 rotates to the halfway or tha maximum moving limit.

The guide roller 10, the axis 10a, the support axis 10b, the prolongation 10c, the spring 13, and the limit switch 14 constitute a twisting detecting switch means A' in which the guide roller 10 is employed as an actuating part, and the twisting detecting switch means A' and the pinch roller 9 constitute a twisting detection means A.

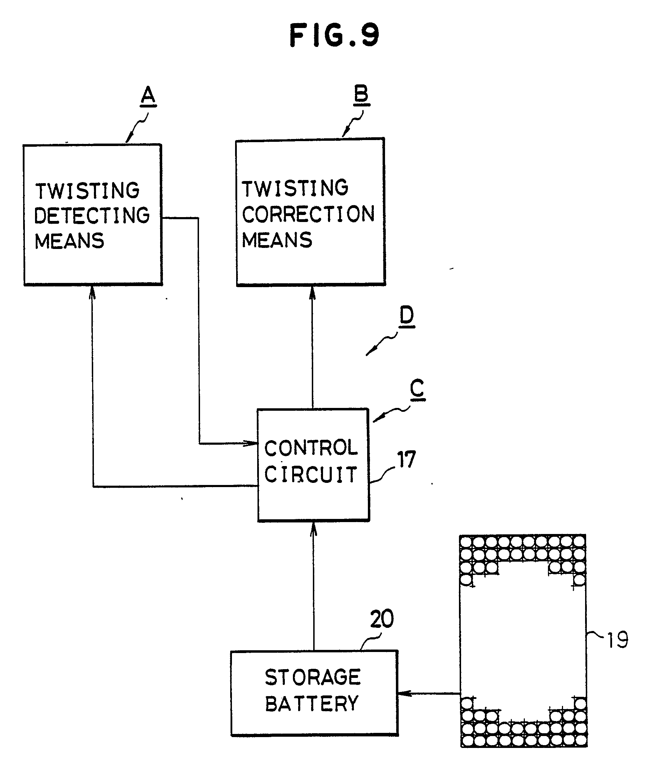

As illustrated in Fig. 3, the limit switch 14 in the twisting detecting means A is connected via a control circuit 17 (Fig. 9) to an electrically actutuating cylinder 16 which actuates a correction roller 15 located in front of the twisting detection device A in running direction of the outgoing run 1a. The electrically actuating cylinder 16 is double-acting type and is connected via a control circuit 17 (Fig. 9) to a limit switch 14 in the twisting detecting means A having similar structure for pressing up a guide roller 10 at the opposite side of the outgoing belt 1a.

As illustrated in Fig. 7, the correction roller 15 is axially supported by a U-shaped frame 18 beneath the outgoing belt 1a. Usually, the axis of the correction roller 15 is perpedicular to the axis of the belt 1. A lower axis 18a of the U-shaped frame is fixed to a horizontal arm 18b, the other end of which is connected to a rod 16a of the electrically actuating cylinder 16. (Fig. 3) As shown in Fig. 8, the rotation of the axis 18a via the rod 16a results in change of a correction angle between the axis of the correction roller 15 and the line perpendicular to the longitudinal axis of the belt 1a. The correction roller 15, the electrically actuating cylinder 16 constitute twisting correction means B which is actuated by the twisting detecting means A, and both the means A and B and control means C comprising the control circuit 17 constitute twisting automatic correction means D.

The numeral 19 in Fig. 9 represents a solar cell located in the vicinity of the twisting detecting means A and the twisting correction means B and is connected via a storage battery 20 for the storage of electricity to the two means A and B. Instead of the solar cell 19, an aerogenerator, other own generators or batteries may be used. Also, instead of the electrically actuating cylinder 16, driving means such as motor (not shown) may be used.

In the above embodiments, the outgoing belt 1a is slightly twisted, so that one side edge moves upwardly along the pinch roller 9 in the twisting detecting means A to contact and press up the guide roller 10. Counterclockwise force is given to the guide roller 10 by the spring 13 (Fig. 5) and comes to twisting correction force which presses the side edge of the belt 1 to the original position. Therefore, in case that the twisting of the belt 1 is slight, it is overcome by the correction force of the guide roller 10. In case that the twisting of the belt 1 is more than predetermined value, the guide roller 10 rotates upwardly by one edge of the belt 1a to actuate the limit switch 14. The limit switch 14 thus actuated transfers a signal to the control circuit 17, which actuates the electrically actuating cylinder 16 according to the detection signal to adjust the correction angle α. The correction roller 15 rotates at the position of the correction angle α, so that the belt 1a intends to run in a direction perpendicular to the axis of the correction roller 15, whereby the twisting is corrected.

The above mebodiments relate to a tubular belt conveyor in which an endless belt is rolled up by overlapping the londitudinal side edges one on another, but the present invention may be applied to a tubular belt conveyor in which an endless belt is rolled up by bringing the longitudinal edges into abutment as shown in Fig. 10 or contacting or getting close to each other. Also, the other known twisting correction means may be used.

The twisting detecting switch means A' may comprise only the limit switch which is fixed to a prolongation perpendicular to running direction of the belt held between two pinch rollers without giving the correction force of the guide roller 10.

The pinch rollers 9 may comprise only one pair, or the guide roller 10 is capable of moving parallel to the side edges of the conveyor belt or the twisting detecting means may be provided at a flat-shaped conveyor belt.

Fig. 11 illustrates another embodiment of the twisting correction means. The means is the same as what is shown in Fig. 6 except that the axis 10a of the guide roller 10 is fixed to a stationary member such as the shape-maintaining frame 4. The same numerals is given to the same parts as in Fig. 6 and the details thereof are omitted. In the twisting correction means as shown in Fig. 11, in case that the conveyor belt 1 is twisted, the side edge of the conveyor belt 1 held between the pinch rollers 9 engages with the guide roller 10 with high rigidity, so that the movement of the side edge in a circumferential direction stops, whereby the belt 1 is no more twisted. Also, instead of the guide roller which rotates around the axis, there may be provided a plate or a rod which is fixed to a stationary member.

Fig. 12 illustrates further embodiment of the twisting detecting means according to the present invention. The means is the same as what is shown in Fig. 5 except that the limit switch 14 is omitted. In Fig. 12, the same numerals are given to the same members in Fig. 5. In the twisting correction means in Fig. 12, as the twisting of the conveyor belt 1 becomes larger, the rotation angle of the guide roller 10 by the engagement with the side edge of the conveyor belt 1 becomes larger to increase energizing force of the spring 13. Therefore, it is advantageous that the twisting correction force varies proportional to the twisting of the belt to ensure proper twisting correction. The other function and effect are similar to those shown in Fig. 11.

As described above, according to the first invention, the device having such simple structure compensates rigidity of the conveyor belt at the twisting detecting section to prevent error operation of the detection involved by the bending thereof, whereby accuracy in the operation is assured. According to the second invention, based on similar principle, the device compensates the rigidity of the side edge of the belt to prevent its bending, whereby it is advantageous that the simple structure can prevent twisting certainly. Further, according to the third invention, the twisting which occurs in the belt can be accurately corrected automatically, which is advantageous.

It is to be understood that the description herein merely relates to preferred embodiments of the present invention and the various changes and modifications may be made without departing from the scope of the invention as defined in the following claims:

## Claims

1) A device for detecting twisting of a tubular belt in a tubular belt conveyor in which the endless belt is rolled up into tubular form and rotates between a pair of rollers, the device comprising:
a pair of pinch rollers between which the longitudinal side edge of the belt is held; and
means for detecting twisting and disposed perpendicular to the length of the pinch roller, said means being engageable with the longitudinal side edge of the belt held between the pinch rollers on circumferential movement of the side edge when the belt is twisted.

2) A device as defined in claim 1 wherein said means for detecting twisting comprises a guide roller which is rotatable around its axis.

3) A device as defined in claim 1 or 2 comprising means for producing an electric signal of the twisting to transmit it to means for correcting the twisting.

4) A device as defined in claim 3 wherein said means for producing an electric signal comprises a limit switch.

5) A device for correcting twisting of a tubular belt in a tubular belt conveyor in which the endless belt is rolled up into tubular form and rotates between a pair of rollers, the device comprising:
a pair of pinch rollers between which the longitudinal side edge is held; and
means for correcting twisting and disposed perpendicular to the length of the pinch roller to block circumferential movement of the side edge held between the pinch rollers.

6) A device as defined in claim 5 wherein said means for correcting twisting comprises a guide roller which is rotatable around its axis.

7) A device as defined in claim 6 wherein the guide roller is fixed to a stationary member.

8) A device as defined in claim 6 wherein resilient means is attached to a prolongation of the axis of the guide roller and is given by force previously, whereby, when the guide roller is pressed up by the longitudinal edge of the belt as a result of twisting, it forces the edge in the opposite direction to correct the twisting.

9) A device as defined in claim 8 wherein said resilient means is a spring.

10) A device for correcting twisting of a tubular belt in a tubular belt conveyor in which the endless belt is rolled up into tubular form and rotates between a pair of rollers, the device comprising:
a pair of pinch rollers between which the longitudinal side edge is held;
means for detecting twisting and disposed perpendicular to the length of the pinch roller, said means being engageable with the longitudinal side edge of the belt held between the pinch rollers when the belt is twisted;
means for producing an electric signal when the means for detecting twisting is actuated as a result of twisting; and
means for correcting twisting on receipt of the signal from said means for producing a signal.

11) A device as defined in claim 10 wherein said means for detecting the twisting comprises a guide roller which is rotatable around its axis.

12) A device as defined in claim 11 wherein said means for producing an electric signal comprises a limit switch.

13) A device as defined in claim 12 wherein said means for correcting twisting comprises a roller which runs under the belt at an angle between its axis and line perpendicular to the length of the belt, the angle being changeable depending on the signal sent from the limit switch.

14) A device as defined in claims 13 wherein the guide roller is fixed to a stationary member for blocking the circumferential movement of the side edge to correct small twisting, while large twisting is corrected by the correction roller with the signal sent via the limit switch which is actuated at more than certain value of the twisting.

15) A device as defined in claim 13 wherein resilient means is attached to a prolongation of the axis of the guide roller and is given by force previously, whereby, when the guide roller is pressed up the side edge as a result of small twisting, it forces the edge in an opposite direction to correct the small twisting, while large twisting is corrected by the correction roller with the signal sent via the limit switch which is actuated at more than certain value of the twisting.

16) A device as defined in claim 15 wherein said resilient means is a spring.

# FIG.1

# FIG.2

# FIG.3

EP 0 301 454 A1

**FIG.4**

**FIG.5**

**FIG.6**

**FIG.7**

**FIG.8**

# FIG.9

# FIG. 10

# FIG. 11

# FIG. 12

# FIG. 13

# FIG. 14

| DOCUMENTS CONSIDERED TO BE RELEVANT | | | EP 88111920.0 | |
|---|---|---|---|---|
| Category | Citation of document with indication, where appropriate, of relevant passages | | Relevant to claim | CLASSIFICATION OF THE APPLICATION (Int. Cl.4) |
| D,Y | <u>US - A - 4 402 395</u> (HASHIMOTO) . <br> * Fig. 14; column 8, lines 1-12 * | | 1-7,10-12 | B 65 G 15/08 <br> B 65 G 15/64 <br> B 65 G 39/16 |
| A | | | 13 | |
| | -- | | | |
| Y | PATENT ABSTRACTS OF JAPAN, unexamined applications, field M, vol. 7, no. 217, September 27, 1983 <br> THE PATENT OFFICE JAPANESE GOVERNMENT <br> page 152 M 245 <br>     * Kokai-no. 58-113 009 (SUZUKI) * | | 1-7,10-12 | |
| | -- | | | |
| A | <u>AT - B - 238 636</u> (SCHILDE) <br>     * Page 2, lines 2-8 * | | 1,2,5,6,8,9 | TECHNICAL FIELDS SEARCHED (Int. Cl.4) |
| | -- | | | |
| D,A | <u>JP - U - 62-96 004</u> <br>     * Totality * | | 1,5,10 | B 65 G |
| | ---- . | | | |

The present search report has been drawn up for all claims

| Place of search | Date of completion of the search | Examiner |
|---|---|---|
| VIENNA | 18-10-1988 | BAUMGARTNER |